# FASCICULE DE BREVET EUROPEEN

(11) **EP 3 515 728 B1**
(45) Date de publication et mention de la délivrance du brevet: **29.07.2020**
(21) Numéro de dépôt: 17780838.3
(22) Date de dépôt: 25.09.2017
(51) Int. Cl.: B60C 15/02, B60C 5/16, B60B 21/12, B60C 15/04

(54) **ADAPTATEUR POUR ENSEMBLE ROULANT ET ENSEMBLE ROULANT LE COMPRENANT**
ADAPTER FÜR EINE ANORDNUNG MIT RÄDERN UND ANORDNUNG MIT RÄDERN DAMIT
ADAPTER FOR A ROLLING ASSEMBLY AND ROLLING ASSEMBLY COMPRISING SAME

(30) Priorité: 26.09.2016 FR 1659010
(43) Date de publication de la demande: 31.07.2019
(73) Titulaire: Compagnie Générale des Etablissements Michelin, 63000 Clermont-Ferrand (FR)
(72) Inventeur: BAUMGARTNER, Gérard, 63040 Clermont-Ferrand cedex 9 (FR); DELFINO, Antonio, 63040 Clermont-Ferrand cedex 9 (FR); WALSER, Daniel, 63040 Clermont-Ferrand cedex 9 (FR)
(74) Mandataire: Noel, Luminita
(86) Numéro de dépôt international: PCT/FR2017/052561
(87) Numéro de publication internationale: WO 2018/055309

(56) Documents cités:
- WO-A1-2015/091618
- FR-A1- 2 795 022
- FR-A1- 3 028 449
- JP-A- H0 796 720

## Description

L'invention concerne un adaptateur pour ensemble roulant comprenant un pneumatique et une jante, ledit adaptateur étant destiné à assurer la liaison entre le pneumatique et la jante. Il concerne également un ensemble roulant comprenant ledit adaptateur.

Un pneumatique est une structure torique dont l'axe de révolution est l'axe de rotation du pneumatique, comprenant une bande de roulement destinée à entrer en contact avec un sol, deux flancs et deux bourrelets destinés à entrer en contact avec une jante, les deux bourrelets étant reliés à la bande de roulement par les deux flancs.

On rappelle ci-après les définitions utilisées dans la présente invention :
- « direction axiale YY' » : direction parallèle à l'axe de rotation du pneumatique,
- « direction radiale ZZ'» : direction perpendiculaire à l'axe de rotation du pneumatique,
- « plan radial » : plan qui contient l'axe de rotation du pneumatique et défini par les directions radiale et axiale,
- « direction circonférentielle XX' » : direction perpendiculaire à un plan radial,
- « plan équatorial » : plan perpendiculaire à l'axe de rotation et passant par le milieu de la bande de roulement du pneumatique,
- « mélange caoutchouteux » : désigne une composition de caoutchouc comportant au moins un élastomère et une charge.

Dans la demande WO2015091618, il est déjà connu d'insérer, entre les bourrelets d'un pneumatique et une jante, un élément de liaison ou adaptateur. Cet adaptateur, constitué de mélanges caoutchouteux renforcés, est déformable élastiquement au moins dans les deux directions radiale et axiale et comprend une extrémité axialement intérieure et une extrémité axialement extérieure. Un tel adaptateur permet de dissocier la partie de l'ensemble roulant pouvant être considérée comme travaillant réellement comme un pneumatique, de la partie de l'ensemble roulant pouvant être considérée comme travaillant comme une jante.

Mais, si un tel ensemble roulant permet au pneumatique d'assurer ses fonctions usuelles, et notamment une réponse en poussée de dérive suivant l'application d'un angle de dérive au pneumatique qui confère ainsi à l'ensemble roulant une flexibilité suffisante pour protéger le pneumatique de toute dégradation, il peut être la cause de l'apparition voire la propagation de fissures dans le renfort extérieur, constituant l'extrémité axialement extérieure, du fait de multiples répétitions de chocs de type « nid de poule ».

En effet, l'adaptateur de l'état de la technique ci-dessus référencé, assurant la liaison de chaque bourrelet du pneumatique avec la jante, n'a pas les caractéristiques mécaniques optimales, principalement en termes de rigidités, permettant d'absorber de grandes déformations lors du passage de l'ensemble roulant dans des nids de poule. Ceci peut entraîner des déformations plastiques résiduelles, voire la rupture, dudit adaptateur, et, par conséquent, l'endommagement de l'ensemble roulant.

De plus, aucune suggestion n'est donnée dans ce document sur des évolutions de conception de l'adaptateur permettant de surmonter les inconvénients précédemment décrits.

Aussi les inventeurs se sont donnés comme objectif de proposer un nouvel adaptateur ayant une faible masse, et une déformation élastique tout en présentant une raideur différente selon les axes circonférentiel, axial et radial.
L'invention a donc pour objet un adaptateur pour ensemble roulant ayant un axe de rotation (YY'), l'ensemble roulant comprenant :
- un pneumatique ayant deux bourrelets,
- une jante ayant deux rebords de jante,
   pour chaque bourrelet, ledit adaptateur assurant la jonction entre le bourrelet et la jante,
ledit adaptateur comprenant :
- une extrémité axialement intérieure reliée à la jante,
- une extrémité axialement extérieure comprenant un élément de renfort extérieur et destinée à entrer en contact par une face axialement intérieure, sensiblement radiale, ou face d'appui, avec un bourrelet,
- un corps, connectant l'extrémité axialement extérieure avec l'extrémité axialement intérieure de manière à former une pièce unitaire, comprenant au moins une armature de renforcement principale assurant la liaison entre l'élément de renfort extérieur et l'élément de renfort intérieur, et comprenant un siège d'adaptateur sensiblement axial destiné à entrer en contact avec un bourrelet, lesdits extrémités et corps étant disposés selon un axe axial YY'.

L'adaptateur se caractérise **en ce que** l'élément de renfort extérieur est une structure sensiblement annulaire, appelée tringle, de section sensiblement polygonale, comprenant au moins deux premières couches de matériau composite et/ou métallique, et au moins deux secondes couches de mélange caoutchouteux, lesdites premières et seconde couches étant disposées parallèlement et en alternance entre elles et à parallèlement à l'axe YY'.

L'adaptateur selon l'invention, élément de liaison entre le pneumatique et la jante, permet à un ensemble roulant, en roulage, d'éviter des contraintes de cisaillement trop élevées au cœur de l'élément de renfort, et par conséquent d'augmenter le débattement mécanique de l'adaptateur tout en laissant les matériaux constitutifs de l'adaptateur présenter une déformation élastique.

Un autre avantage de l'adaptateur selon l'invention est de permettre, d'une part, une raideur en compression suffisante de manière à garantir sa stabilité mécanique, et d'autre part, une raideur en flexion importante de manière à diffuser l'effort mécanique aussi loin que possible du point d'impact lors d'un choc trottoir ou lors du passage dans un nid de poule.

L'extrémité axialement extérieure de l'adaptateur délimite axialement une portion du corps d'adaptateur, appelé siège d'adaptateur, et destinée à recevoir un bourrelet de pneumatique. Le siège d'adaptateur assure la même fonction qu'un siège de jante, qui est la portion sensiblement axiale d'un rebord de jante. Selon la direction axiale, la face d'appui de l'extrémité axialement extérieure sert d'appui au bourrelet du pneumatique à l'instar d'un crochet de jante, qui est la portion sensiblement radiale d'un rebord de jante. Le pneumatique est alors immobilisé axialement par la pression de gonflage, et est plaqué contre la face d'appui de cette extrémité axialement extérieure, comme dans le cas usuel d'un bourrelet de pneumatique appliqué contre un crochet de jante.

L'extrémité axialement intérieure de l'adaptateur pourrait être dénommée « bourrelet d'adaptateur » puisqu'elle peut être destinée à accrocher l'adaptateur sur le rebord d'une jante, comme dans le cas usuel d'un bourrelet de pneumatique appuyé sur un rebord de jante.

De préférence, l'extrémité axialement intérieure est lié à un bord de jante, tel qu'un crochet de jante par tout moyen de fixation, tel que par la technique classique de serrage, de collage, de sertissage, de vissage, avec une ou plusieurs gorges de centrage avec ou sans renforcement pour serrage sur un crochet de jante.

De préférence, le mélange caoutchouteux présente un module sécant supérieur ou égale à 10MPa et inférieur ou égale à 100MPa.

De préférence, le mélange caoutchouteux présente un allongement élastique supérieur ou égal à 50%.

Le mélange caoutchouteux peut être choisi parmi les compositions élastomères classiquement utilisées dans le domaine du pneumatique, tel que les compositions diénique, polyuréthane.

De préférence, le matériau composite ou métallique présente un module d'Young supérieur ou égale à 40GPa et inférieur ou égale à 200GPa.

Un autre objet de l'invention est un ensemble monté comprenant l'adaptateur tel que défini précédemment.

L'invention est décrite à l'aide des figures 1 à 3 suivantes, schématiques et non nécessairement à l'échelle:
- figure 1 : coupe radiale d'un adaptateur non monté, selon une première variante de l'invention,
- figure 2 : vue en trois dimensions de l'extrémité axialement extérieure de l'adaptateur selon l'invention,
- figure 3 : coupe radiale d'un ensemble roulant, comprenant deux adaptateurs.

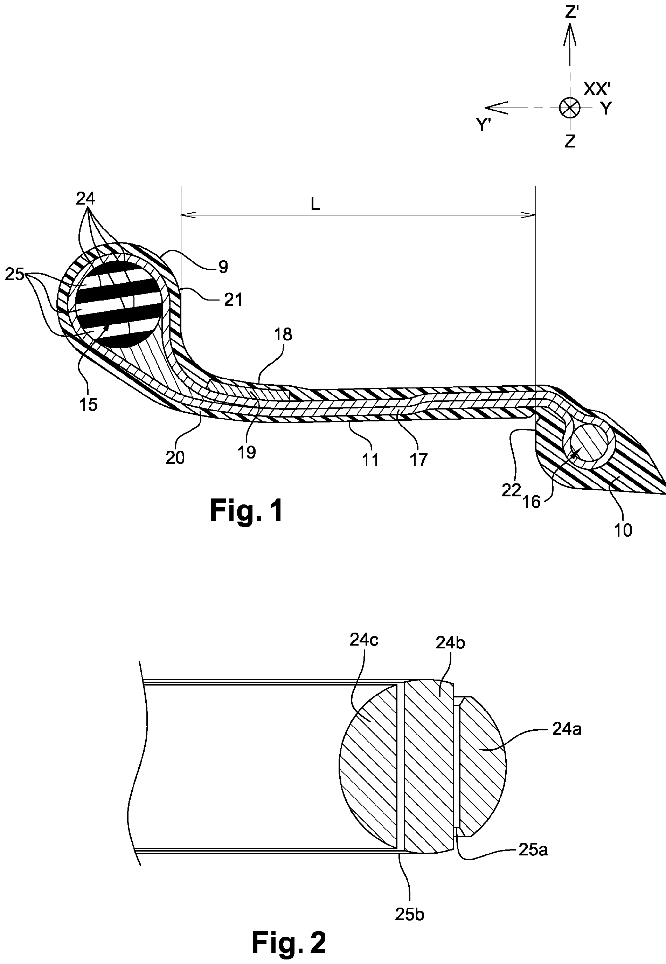

La figure 1 représente un adaptateur non monté sur jante, selon une première variante de l'invention. Cet adaptateur comprend une extrémité axialement extérieure 9 comprenant un élément de renfort extérieur 15, une extrémité axialement intérieure 10 comprenant un élément de renfort intérieur 16, et un corps 11 comprenant une armature de renforcement principale 17. L'armature de renforcement principale 17 est constituée par une seule couche de renforcement qui s'enroule respectivement autour de l'élément de renfort intérieur 16 de l'extrémité axialement intérieure 10 et autour de l'élément de renfort extérieur 15 de l'extrémité axialement extérieure 9. Au niveau du corps 11, les portions aller et retour de ladite couche de renforcement constitue ainsi un empilement sensiblement radial d'au moins deux couches de renforcement. L'armature de renforcement principale 17 est enveloppée par une couche de mélange caoutchouteux 20. Le corps 11 comprend en outre un siège d'adaptateur 18 destiné à entrer en contact avec un bourrelet de pneumatique. Le corps 11 a une largeur axiale L, mesurée entre la face axialement intérieure 21 de l'extrémité axialement extérieure 9 et la face axialement extérieure 26 de l'extrémité axialement intérieure 10.

Sur la figure 1, l'élément de renfort extérieur 15 est une structure annulaire, appelée tringle, constituée par quatre couches 24 de matériau composite constituées de fibres de verre unidirectionnelle, de module d'Young égale à 73GPa. Les fibres sont disposées selon la direction circonférentielle, et sont enrobées d'une résine vinylester de module d'Young de 3.5GPa. La proportion des fibres de verre est de 70%. Le module d'Young de chaque couche 24, prise dans leur ensemble, est de 40GPa.

Le mélange caoutchouteux 25 peut être du polyuréthane de module sécant compris entre 10MPa et 100MPa. Les couches 24 et 25 sont disposées de manière alternée selon une direction radiale ZZ', et parallèlement les unes par rapport aux autres et sensiblement par rapport à la direction YY'.

La figure 2 représente un mode de réalisation de l'extrémité axialement extérieur 15. Dans ce mode de réalisation, la couche 24 est constituée de trois sous-couches 24a, 24b et 24c d'épaisseur égale à 2.7mm, 2.0mm et 3.4m, respectivement. L'épaisseur est mesurée dans la portion la plus large de ladite sous couche. La couche 25 est également divisée en sous-couches 25a et 25b, toutes deux d'épaisseur égale à 0.5mm. Le diamètre moyen du renfort axialement extérieur 15 est compris entre 8mm et 16mm.

Le mélange caoutchouteux 25 permet d'absorber les cisaillements qui apparaissent lors du roulage tout en donnant suffisamment de raideur globale en flexion (compression et torsion) par son module sécant.

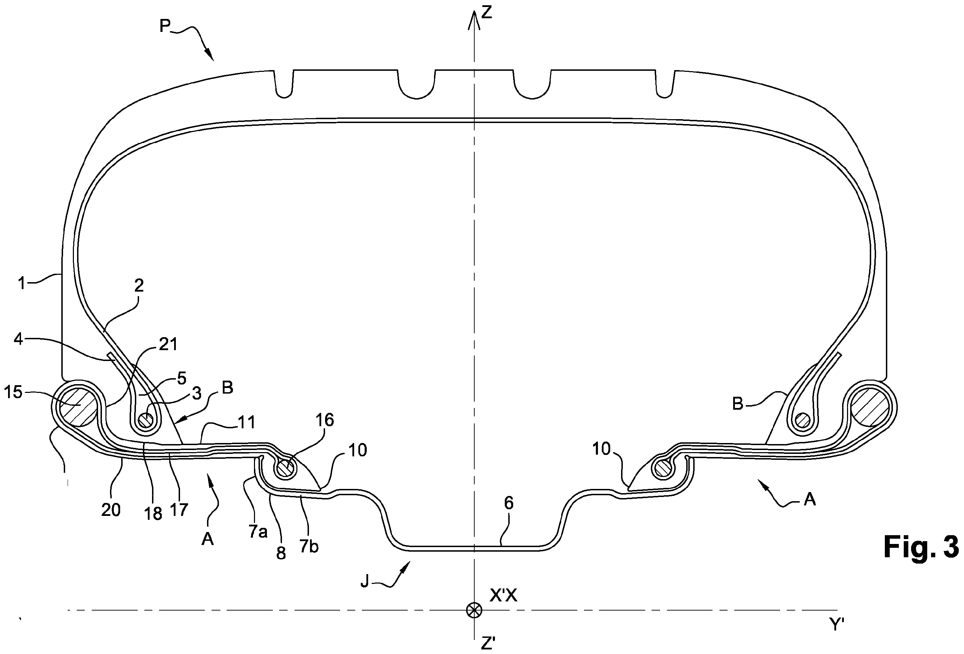

La figure 3 présente une coupe radiale, dans un plan YZ, d'un ensemble roulant comprenant un pneumatique P, une jante J et, pour chaque bourrelet B, un adaptateur A assurant la jonction entre le bourrelet B et la jante J. Le pneumatique P comprend une bande de roulement (non référencée) prolongée radialement vers l'intérieur par deux flancs 1, eux-mêmes prolongés radialement vers l'intérieur par deux bourrelets B. Dans chaque bourrelet B, l'armature de carcasse 2 s'enroule autour d'un élément de renforcement circonférentiel ou tringle 3, pour former un retournement 4 séparé de l'armature de carcasse 2 par un élément de remplissage 5. La jante J comprend, dans une portion médiane, une gorge de montage 6, destinée à faciliter le montage des bourrelets B du pneumatique P, et, à ses extrémités axiales, deux rebords de jante 8 comprenant chacun une portion sensiblement radiale ou crochet de jante 7a et une portion sensiblement axiale ou siège de jante 7b. L'adaptateur A comprend une extrémité axialement intérieure 10 comprenant un élément de renfort intérieur 16 et destinée à être montée sur un rebord de jante 8, une extrémité axialement extérieure 9 comprenant un élément de renfort extérieur 15, tel que défini précédemment, et destinée à entrer en contact par une face axialement intérieure, sensiblement radiale, ou face d'appui 21, avec un bourrelet B, et enfin un corps 11, connectant l'extrémité axialement extérieure 9 avec l'extrémité axialement intérieure 10 de manière à former une pièce unitaire, comprenant au moins une armature de renforcement principale 17 assurant la liaison entre l'élément de renfort extérieur 15 et l'élément de renfort intérieur 16, et comprenant un siège d'adaptateur 18 sensiblement axial destiné à entrer en contact avec un bourrelet B.

## Revendications

1. Adaptateur (A) pour ensemble roulant ayant un axe de rotation (YY'),
l'ensemble roulant comprenant :
- un pneumatique (P) ayant deux bourrelets (B),
- une jante (J) ayant deux rebords de jante (8),
- pour chaque bourrelet (B), ledit adaptateur (A) assurant la jonction entre le bourrelet (B) et la jante (J),
ledit adaptateur (A) comprenant :
- une extrémité axialement intérieure (10) reliée à la jante (J) et comprenant un élément de renfort intérieur (16),
- une extrémité axialement extérieure (9) comprenant un élément de renfort extérieur (15) et destinée à entrer en contact par une face axialement intérieure, sensiblement radiale, ou face d'appui (21), avec un bourrelet (B),
- un corps (11), connectant l'extrémité axialement extérieure (9) avec l'extrémité axialement intérieure (10), comprenant au moins une armature de renforcement principale (17) assurant la liaison entre l'élément de renfort extérieur (15) et l'élément de renfort intérieur (16), et comprenant un siège d'adaptateur (18) sensiblement axial destiné à entrer en contact avec un bourrelet (B), lesdits extrémités et corps étant disposés selon un axe axial YY',
l'élément de renfort extérieur (15) étant en totalité axialement extérieur à la face d'appui (21), ledit adaptateur étant **caractérisé en ce que** l'élément de renfort extérieur (15) est une structure sensiblement annulaire, appelée tringle, de section sensiblement polygonale, comprenant au moins deux premières couches (24) de matériau composite et/ou métallique, et au moins deux secondes couches (25) de mélange caoutchouteux, lesdites premières (24) et seconde (25) couches étant disposées parallèlement et en alternance entre elles et parallèlement à l'axe YY'.

2. Adaptateur selon la revendication 1, **dans lequel** le mélange caoutchouteux présente un module sécant supérieur ou égale à 10MPa et inférieur ou égal à 100MPa.

3. Adaptateur selon la revendication 1, **dans lequel** le mélange caoutchouteux présente un allongement élastique supérieur ou égal à 50%.

4. Adaptateur selon la revendication 1, **dans lequel** le matériau composite ou métallique présente un module d'Young supérieur ou égal à 40GPa et inférieur ou égal à 200GPa.

5. Adaptateur selon la revendication 1, **dans lequel** le mélange caoutchouteux est choisi parmi des compositions diéniques, polyuréthanes.

6. Ensemble roulant **caractérisé en ce qu'**il comprend l'adaptateur selon l'une des revendications précédentes.

## Patentansprüche

1. Adapter (A) für eine Fahreinheit mit einer Drehachse (YY'),
wobei die Fahreinheit umfasst:
- einen Reifen (P) mit zwei Wülsten (B),
- eine Felge (J) mit zwei Felgenhörnern (8),
- wobei für jeden Wulst (B) der Adapter (A) die Verbindung zwischen dem Wulst (B) und der Felge (J) sicherstellt,
wobei der Adapter (A) umfasst:
- ein axial inneres Ende (10), das mit der Felge (J) verbunden ist und ein inneres Verstärkungselement (16) umfasst,
- ein axial äußeres Ende (9), das ein äußeres Verstärkungselement (15) umfasst und dazu bestimmt ist, über eine im Wesentlichen radiale axial innere Fläche, oder Anlagefläche (21), mit einem Wulst (B) in Kontakt zu kommen,
- einen Körper (11), der das axial äußere Ende (9) mit dem axial inneren Ende (10) verbindet, der wenigstens eine Hauptverstärkungsbewehrung (17) umfasst, welche die Verbindung zwischen dem äußeren Verstärkungselement (15) und dem inneren Verstärkungselement (16) sicherstellt, und der einen im Wesentlichen axialen Adaptersitz (18) umfasst, der dazu bestimmt ist, mit einem Wulst (B) in Kontakt zu kommen, wobei die Enden und der Körper entlang einer axialen Achse YY' angeordnet sind,
wobei sich das äußere Verstärkungselement (15) vollständig axial außerhalb der Anlagefläche (21) befindet,
wobei der Adapter **dadurch gekennzeichnet ist, dass** das äußere Verstärkungselement (15) eine im Wesentlichen ringförmige Struktur, Wulstkern genannt, mit im Wesentlichen polygonalem Querschnitt ist, welche wenigstens zwei erste Schichten (24) aus Verbundmaterial und/oder metallischem Material und wenigstens zwei zweite Schichten (25) aus Kautschukmischung umfasst, wobei die ersten (24) und zweiten (25) Schichten parallel zueinander und einander abwechselnd sowie parallel zur Achse YY' angeordnet sind.

2. Adapter nach Anspruch 1, wobei die Kautschukmischung einen Sekantenmodul aufweist, der größer oder gleich 10 MPa und kleiner oder gleich 100 MPa ist.

3. Adapter nach Anspruch 1, wobei die Kautschukmischung eine elastische Dehnung aufweist, die größer oder gleich 50 % ist.

4. Adapter nach Anspruch 1, wobei das Verbundmaterial oder metallische Material einen Elastizitätsmodul aufweist, der größer oder gleich 40 GPa und kleiner oder gleich 200 GPa ist.

5. Adapter nach Anspruch 1, wobei die Kautschukmischung aus Dienzusammensetzungen, Polyurethanen ausgewählt ist.

6. Fahreinheit, **dadurch gekennzeichnet, dass** sie den Adapter nach einem der vorhergehenden Ansprüche umfasst.

## Claims

1. Adapter (A) for a rolling assembly having an axis of rotation (YY'),
the rolling assembly comprising:
- a tyre (P) having two beads (B),
- a rim (J) having two rim bead seats (8),
- for each bead (B), the said adapter (A) providing the connection between the bead (B) and the rim (J),
the said adapter (A) comprising:
- an axially inner end (10) connected to the rim (J) and comprising an inner reinforcing element (16),
- an axially outer end (9) comprising an outer reinforcing element (15) and intended to come into contact, via a substantially radial axially inner face, or bearing face (21), with a bead (B),
- a body (11) connecting the axially outer end (9) to the axially inner end (10), comprising at least one main reinforcement (17) providing the connection between the outer reinforcing element (15) and the inner reinforcing element (16), and comprising a substantially axial adapter seat (18) intended to come into contact with a bead (B), the said ends and body being arranged along an axial axis YY',
- the outer reinforcing element (15) being completely axially on the outside of the bearing face (21),
said adaptor being **characterized in that** the outer reinforcing element (15) is a substantially annular structure, referred to as a bead wire, of substantially polygonal section, comprising at least two first layers (24) of composite and/or metallic material, and at least two second layers (25) of rubber compound, the said first (24) and second (25) layers being arranged mutually parallel and in alternation with each other and parallel to the axis YY'.

2. Adapter according to Claim 1, **in which** the rubber compound has a secant modulus greater than or equal to 10 MPa and less than or equal to 100 MPa.

3. Adapter according to Claim 1, **in which** the rubber compound has an elastic elongation greater than or equal to 50 %.

4. Adapter according to Claim 1, **in which** the composite or metallic material has a Young's modulus greater than or equal to 40 GPa and less than or equal to 200 GPa.

5. Adapter according to Claim 1, **in which** the rubber compound is selected from a diene and polyurethane compositions.

6. Rolling assembly, **characterized in that** it comprises the adapter according to one of the preceding claims.
